# EUROPÄISCHE PATENTSCHRIFT

(11) **EP 1 137 160 B1**
(45) Veröffentlichungstag und Bekanntmachung des Hinweises auf die Patenterteilung: **02.02.2011**
(21) Anmeldenummer: 01105594.4
(22) Anmeldetag: 06.03.2001
(51) Int. Cl.: H02M 7/48, H02J 3/38

(54) **Stromrichterschaltung**
Power converter circuit
Circuit convertisseur de puissance

(30) Priorität: 20.03.2000 DE 10013672
(43) Veröffentlichungstag der Anmeldung: 26.09.2001
(73) Patentinhaber: SIEMENS AKTIENGESELLSCHAFT, 80333 München (DE)
(72) Erfinder: Eckel, Hans-Günther, Dr., 91056 Erlangen (DE); Marquardt, Rainer, Prof., 85521 Ottobrunn/Riemerling (DE)

(56) Entgegenhaltungen:
- CH-A- 682 435
- DE-C- 4 111 734
- JP-A- 60 098 875
- US-A- 4 634 943
- US-A- 5 450 309

## Beschreibung

Die Erfindung bezieht sich auf eine Stromrichterschaltung mit wenigstens einem Phasen-Brückenzweig, der wenigstens zwei gleichspannungsseitig elektrisch parallel geschaltete Stromrichterzweige aufweist, die jeweils wenigstens einen abschaltbaren Halbleiterschalter aufweisen.

In Spannungszwischenkreis-Umrichtern wird die Auslegung der Leistungs-Halbleiterschalter durch die in diesen auftretenden Verlusten bestimmt. Neben den Durchlassverlusten treten in jedem Schaltvorgang Schaltverluste auf. Wenn diese Schaltverluste verringert werden können, so kann bei einem gegebenen Umrichter sein Ausgangsstrom oder seine Schaltfrequenz erhöht werden. Alternativ kann bei einem gegebenen Strom und einer gegebenen Schaltfrequenz die Größe oder Anzahl der verwendeten Leistungs-Halbleiterschalter oder der Kühlungsaufwand eines gegebenen Umrichters reduziert werden.

Es sind zahlreiche Verfahren zur Reduzierung von Schaltverlusten der Leistungs-Halbleiterschalter in Spannungszwischenkreis-Umrichtern bekannt. Diese lassen sich in verschiedene Gruppen einteilen:
1. Passive Schaltungen mit prinzipbedingten Verlusten:
   Bei diesen Schaltungen werden die Einschaltverluste durch Drosseln in den Kommutierungskreisen reduziert. Die Ausschaltverluste werden durch Kondensatoren reduziert, die elektrisch parallel zu den Leistungs-Halbleiterschaltern des Spannungszwischenkreis-Umrichters geschaltet sind.
   Die in diesen Drosseln und Kondensatoren gespeicherte Energie wird in Widerständen in Wärme umgesetzt, wobei gegebenenfalls zuvor noch Umschwingvorgänge auftreten.
   Durch die Verwendung von Drossel und Kondensatoren werden die Verlustleistungen aus den Leistungs-Halbleiterschaltern in Beschaltungswiderstände verlagert. Dadurch reduzieren sich die Gesamtverluste des Spannungszwischenkreis-Umrichters nicht, wobei diese sich eventuell sogar erhöhen können. Außerdem vergrößert sich einerseits das Bauvolumen des Spannungszwischenkreis-Umrichters und andererseits wird der niederinduktive Kommutierungskreis,
   bestehend aus Zwischenkreiskondensator, abschaltbarem Leistungs-Halbleiterschalter und Freilaufdiode aufgetrennt.
2. Passive Schaltungen ohne prinzipbedingte Verluste:
   Auch bei diesen Schaltungen erfolgt die Reduzierung der Einschaltverluste durch in den Kommutierungskreisen befindlichen Drosseln und der Ausschaltverluste durch elektrisch parallel zu den Leistungs-Halbleiterschaltern angeordneten Kondensatoren. Jedoch wird die in den Drosseln und Kondensatoren gespeicherte Energie nicht mehr in Widerständen in Wärme umgesetzt, sondern in den Zwischenkreis des Spannungszwischenkreis-Umrichters, in eine Last oder in eine Hilfsspannungsquelle zurückgespeist. Diese Schaltungen sind theoretisch in der Lage, die Schaltverluste beliebig weit zu reduzieren. Dazu erfordern sie jedoch nicht nur einen erheblichen Aufwand an teilweise schwierig zu fertigen passiven Elementen, beispielsweise Transformatoren mit sehr geringer Streuung, Dioden mit hoher Sperrspannung und hohen Strom, sondern verursachen in diesen Elementen auch wieder neue Verluste, die die erreichbare Reduktion der Schaltverluste begrenzen.
3. Aktive Schaltungen ohne prinzipbedingte Verluste:
   Bei diesen Schaltungen erfolgt die Reduzierung der Ausschaltverluste durch parallel zu den Leistungs-Halbleiterschaltern angeordneten Kondensatoren. Zum Einschalten dieser Leistungs-Halbleiterschalter werden die Kondensatoren mit Hilfsschaltern und Schwingkreisen entladen. Auch diese Schaltungen sind theoretisch in der Lage, die Schaltverluste beliebig weit zu reduzieren. Sie erfordern jedoch zusätzliche Leistungshalbleiter für die Hilfsschalter, in denen wieder neue Verluste entstehen, die auch hier die erreichbare Reduktion der Schaltverluste begrenzen. Außerdem vergrößert sich der Aufwand für die Steuerung.
4. Resonanzschaltungen:
   Bei diesen Schaltungen wird der Spannungszwischenkreis des Spannungszwischenkreis-Umrichters periodisch entladen, um dann die Leistungs-Halbleiterschalter mit geringen Verlusten schalten zu können. Diese Schaltungen sind als quasi Resonanz-Umrichter bekannt, die in Zero-Voltage- oder als Zero-Current-Switch-Konzept (ZVS, ZCS) zu unterscheiden sind. Auch diese Schaltungen sind theoretisch in der Lage, die Schaltverluste beliebig weit zu reduzieren. Sie erfordern im allgemeinen jedoch zusätzliche Leistungshalbleiter als Hilfsschalter und lassen oft keine beliebigen Pulsmuster zu.

Eine gattungsgemäße Stromrichterschaltung ist aus der DE 197 56 250 A1 bekannt. Bei dem in dieser Offenlegungsschrift dargestellten selbstgeführten Stromrichter eines spannungseinprägenden Umrichters weist jede seiner Phasen in Abhängigkeit eines geforderten Laststromes bis zu drei Stromrichterzweigen auf, die elektrisch parallel geschaltet sind. Als Stromrichterventile sind **I**nsulated-**G**ate-**B**ipolar**T**ransistoren (IGBT) vorgesehen. Diese elektrisch parallel geschalteten IGBT-Module werden jeweils von einer Steuerschaltung gesteuert. Weitere Stromrichterschaltungen unit elektrisch parallel geschalteten Wechselrichtern sind aus der US 5 450 309 A, CH 682 435 A5 und der DE 41 11 734 C1 bekannt.

Wenn man in der Lage ist, die Schaltverluste zu reduzieren, kann man entweder die Anzahl der parallelgeschalteten Module verringern bzw. leistungsschwächere Module verwenden. Daraus resultiert eine Kosten- und Volumenreduzierung des Spannungszwischenkreis-Umrichters. Man kann jedoch auch bei gegebenen Modulen und gegebener Modulzahl die Leistung bzw. die Schaltfrequenz des Spannungszwischenkreis-Umrichters erhöhen.

Der Erfindung liegt nun die Aufgabe zugrunde, diese bekannte Stromrichterschaltung derart weiterzugestalten, dass die zuvor genannten Vorteile eintreten.

Diese Aufgabe wird durch die im Vorrichtungsanspruch 1 und im Verfahrensanspruch 5 definierte Erfindung gelöst. Vosteilhafte Ausführungsformen sind in den Unteransprüchen definiert,

Dadurch, dass die Lastausgänge der Stromrichterzweige eines jeden Phasen-Brückenzweiges mit einer Drossel verknüpft sind, deren lastseitige Anschlüsse jeweils einen Lastanschluss des Phasen-Brückenzweiges bilden, und dass die Steueranschlüsse der Halbleiterschalter der Stromrichterzweige eines jeden Phasen-Brückenzweiges jeweils mit einer Ansteuerschaltung eingangsseitig verbunden sind und diese eingangsseitig mit Ausgängen einer Einrichtung zu Generierung von alternierenden Steuersignal verbunden sind, an deren Steuer-Eingang ein Steuersignal und an deren Parameter-Eingang ein ermittelter Phasen-Laststrom anstehen, werden die Einschaltverluste der Halbleiterschalter so reduziert, dass leistungsschwächere Halbleiterschalter verwendet werden können.

Zur Reduzierung der Einschaltverluste werden für die Drosseln keine Dioden und Widerstände mehr benötigt, da immer eine der Drosseln eines Phasen-Brückenzweiges stromlos ist. Bei den über die Drosseln laufenden Kommutierungsvorgängen wird eine Drossel auf und die andere entmagnetisiert. Die in einer Drossel gespeicherte Energie geht somit nicht verloren, sondern schwingt in die andere Drossel. Somit erfolgt die Einschaltentlastung ohne prinzipbedingte Verluste.

Da sich die Drosseln nur im Lastabgang der Stromrichterzweige eines jeden Phasen-Brückenzweiges befindet, werden die niederinduktiven Kommutierungskreise, bestehend aus Zwischenkreiskondensator, abschaltbaren Halbleiterschalter und Freilaufdiode, nicht aufgetrennt. Dadurch können auch weiterhin die für niederinduktive Zwischenkreis optimierten Verpackungs- und Aufbautechniken zum Einsatz kommen.

Da nun die Halbleiterschalter wenigstens zweier gleichspannungsseitig elektrisch parallel geschalteter Stromrichterzweige nicht mehr elektrisch parallel geschaltet sind, werden nun für diese Halbleiterschalter jeweils eine Ansteuerschaltung benötigt. Diese Ansteuerschaltungen eines Phasen-Brückenzweiges werden von einer Einrichtung zur Generierung von alternierenden Steuersignalen angesteuert. Diese Einrichtung erzeugt diese Steuersignale in Abhängigkeit einer Richtung eines ermittelten Phasen-Laststromes aus einem zugeführten Steuersignal. Das heißt, in Abhängigkeit der Richtung des ermittelten Phasen-Laststromes werden die Ansteuersignale des anstehenden Steuersignals alternierend auf die ausgangsseitig angeschlossenen Ansteuerschaltungen gegeben. Dabei wird die Schaltreihenfolge so ausgewählt, dass beim Einschalten eines Halbleiterschalters, der den Strom führen soll, der Stromrichterzweig eines Phasen-Brückenzweiges gewechselt wird. Dabei fließt der Kommutierungsstrom über die beiden Drosseln, die damit die Einschaltverluste des stromübernehmenden Halbleiterschalters reduzieren. Bei dieser Kommutierung kommutiert der Laststrom von einer Freilaufdiode des eines Stromrichterzweiges auf einen Halbleiterschalter des anderen Stromrichterzweiges. Dabei werden nicht nur die Einschaltverluste der stromübernehmenden Halbleiterschalter reduziert, sondern auch die Ausschaltverluste der Freilaufdiode.

Durch die Auftrennung parallel geschalteter Stromrichterzweige eines Phasen-Brückenzweiges einer Stromrichterschaltung und der stromrichtungsabhängigen Schaltreihenfolge von stromübernehmenden Halbleiterschaltern wird erreicht, dass sich die Einschaltverluste wesentlich reduzieren, ohne dass prinzipbedingte Verluste auftreten. Dadurch kann man zu leistungsschwächeren Modulen übergehen, so dass die Stromrichterschaltung kostengünstiger wird, obwohl zusätzliche Ansteuerschaltungen hinzukommen. Falls man die Module nicht wechseln wird, so kann man die Schaltfrequenz oder den Laststrom erhöhen.

Bei einer vorteilhaften Ausführungsform der Stromrichterschaltung sind die im Lastabgang der Stromrichterzweige angeordneten Drosseln sättigbare Drosseln. Dadurch verringert sich der Platzbedarf der Drosseln wesentlich.

Zur weiteren Erläuterung der Erfindung wird auf die Zeichnung Bezug genommen, in der mehrere Ausführungsformen einer erfindungsgemäßen Stromrichterschaltung schematisch veranschaulicht sind.
- FIG 1: zeigt eine Schaltungsanordnung eines einphasigen Chcppers nach der Erfindung, wobei die
- FIG 2: jeweils in einem Diagramm über der Zeit t die zugehö- rigen Steuersignale zeigt, in der
- FIG 3: ist eine dreiphasige Stromrichterschaltung gemäß der Erfindung dargestellt, die
- FIG 4: zeigt eine erfindungsgemäße Steuerschaltung, wobei in der
- FIG 5: jeweils in einem Diagramm über der Zeit t die Steuer- signale der Stromrichterschaltung nach FIG 3 für eine positive Stromrichtung und in der
- FIG 6: jeweils in einem Diagramm über der Zeit t die Steuer- signale der Stromrichterschaltung nach FIG 3 für eine negative Stromrichtung dargestellt sind.

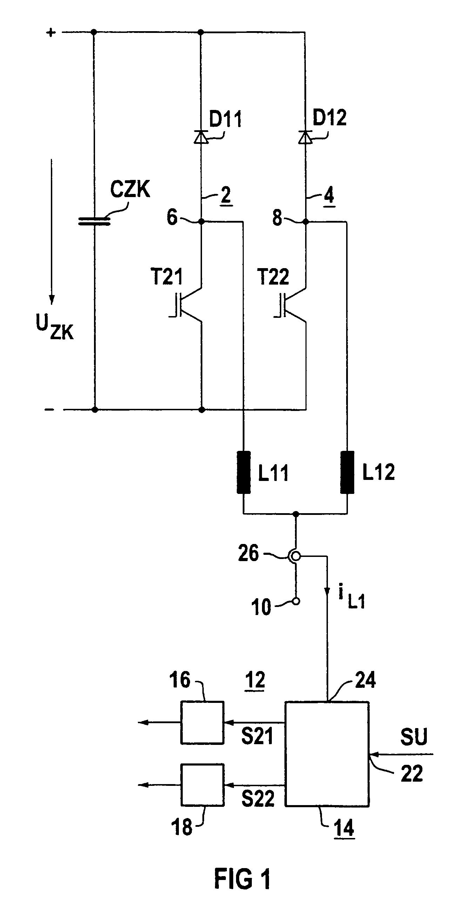

In der FIG 1 ist eine einphasige Stromrichterschaltung nach der Erfindung dargestellt. Diese Stromrichterschaltung weist zwei Stromrichterzweige 2 und 4 auf, die gleichspannungsmäßig elektrisch parallel geschaltet sind. Diese parallelgeschalteten Stromrichterzweige 2 und 4 sind elektrisch parallel zu einem Kondensator CZK geschaltet, der auch als ZwischenkreisKondensator bezeichnet wird. An diesem Zwischenkreis-Kondensator CZK fällt eine Gleichspannung U_{ZK} ab.

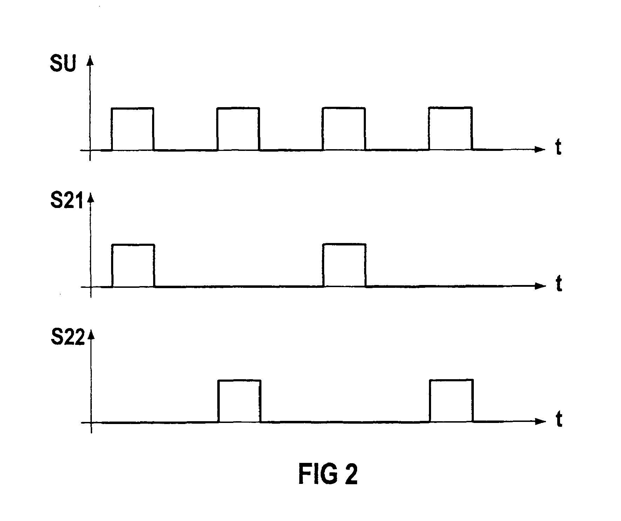

Die Lastausgänge 6 und 8 der beiden Stromrichterzweige 2 und 4 sind jeweils mit einem Anschluss einer Drossel L11 und L12 verknüpft. Die lastseitigen Anschlüsse dieser Drossel L11 und L12 bilden einen Lastanschluss 10. Mittels dieser beiden Drosseln L11 und L12 werden die beiden Lastausgänge 6 und 8 der gleichspannungsseitig elektrisch parallel geschalteten Stromrichterzweige entkoppelt. Jeder Stromrichterzweig 2 bzw. 4 weist einen abschaltbaren Halbleiterschalter T21 bzw. T22, insbesondere einen IGBT, und eine Freilaufdiode D11 bzw. D21 auf. Die zugehörige Steuerschaltung 12 weist eine Einrichtung 14 zur Generierung von alternierenden Steuersignalen S21 und S22 auf, die jeweils in einem Diagramm über der Zeit t in der FIG 2 näher dargestellt sind, und zwei Ansteuerschaltungen 16 und 18. Ausgangsseitig sind diese Ansteuerschaltungen 16 und 18 jeweils mit einem Steueranschluss der Halbleiterschalter T21 und T22 verbunden. Am Steuer-Eingang 22 dieser Einrichtung 14 steht ein Steuersignal SU an, wogegen der Parameter-Eingang 24 dieser Einrichtung 14 mit einer Stromerfassungs-Einrichtung 26 verknüpft ist. Mittels dieser Stromerfassungs-Einrichtung 26 wird der Phasen-Laststrom i_{L1} gemessen. Das Steuersignal SU wird von einer nicht näher dargestellten übergeordneten Einrichtung geliefert und ist im Diagramm über der Zeit t in der FIG 2 näher dargestellt.

Da es sich bei der dargestellten Stromrichterschaltung um einen einphasigen Chopper mit der Funktionalität "Tiefsetzsteller" handelt, ist die Stromrichtung des Laststromes i_{L1} negativ. In Abhängigkeit dieser ermittelten Stromrichtung des Laststromes i_{L1} werden die einzelnen Ansteuersignale des Steuersignals SU alternierend auf die beiden Halbleiterschalter T21 und T22 der beiden Stromrichterzweige 2 und 4 verteilt. Dadurch wird die Einschalthäufigkeit der beiden Halbleiterschalter T21 und T22 um 50 % verringert gegenüber einer Stromrichterschaltung mit parallelgeschalteten Halbleiterschaltern T21 und T22.

Da bei der Kommutierung des Laststromes i_{L1} von einer Diode D11 bzw. D12 eines Stromrichterzweiges 2 bzw. 4 auf einen Halbleiterschalter T22 bzw. T21 eines Stromrichterzweiges 4 bzw. 2 über die beiden Drosseln L11 und L12 erfolgt, werden die Halbleiterschalter T22 bzw. T21 von den Einschaltverlusten und die Freilaufdioden D11 und D12 von den Ausschaltverlusten entlastet. Infolge der Reduzierung der Schaltverluste der Halbleiterschalter T21, T22 kann man leistungsschwächere Halbleitermodule verwenden, die erheblich preiswerter sind. Dieser Preisvorteil ist so groß, dass dieser nicht durch die Aufwendungen für eine zusätzliche Ansteuerschaltung 18 und der Einrichtung 14 zur Generierung alternierender Steuersignale S21 und S22 kompensiert wird.

Mit dem Grundgedanken der Erfindung, nämlich der stromrichtungsabhängigen Schaltreihenfolge der Halbleiterschalter zweier gleichspannungsseitig elektrisch parallel geschalteter Stromrichterzweige 2 und 4, kann man auch bestehende Stromrichterschaltungen derart erweitern, dass eine Reduzierung der Einschaltverluste ohne prinzipbedingte Verluste erreicht wird, wobei die zuvor genannten Vorteile eintreten.

Angewendet auf einen einphasigen Chopper mit nur einem Stromrichterzweig heißt das, dass elektrisch parallel zum bestehenden Stromrichterzweig 2 mit der im Lastausgang angeordneten Drossel L11 ein zweiter Stromrichterzweig 4 elektrisch parallel geschaltet wird, dem ebenfalls im Lastausgang eine Drossel L12 angeordnet ist. Der Halbleiterschalter T22 dieses zweiten Stromrichterzweiges 4 weist eine eigne Ansteuerschaltung 18 auf. Die lastseitigen Anschlüsse der Drosseln L11 und L12 werden zu einem Lastanschluss 10 zusammengeschaltet. Außerdem ist eine Einrichtung 14 zur Generierung von alternierenden Steuersignalen S21 und S22 den beiden Ansteuerschaltungen 16 und 18 vorgeschaltet.

Der Aufwand für eine Anpassung einer bestehenden Stromrichterschaltung mit einem Stromrichterzweig erhöht sich gegenüber einer Stromrichterschalter mit zwei Stromrichterzweigen zusätzlich um einen zweiten Stromrichterzweig. Dieser zusätzlichte Aufwand rechtfertigt sich, wenn das nur wegen auftretender Schaltverluste verwendete leistungsstarke Halbleitermodul gegen zwei leistungsschwächere Module ausgetauscht werden kann.

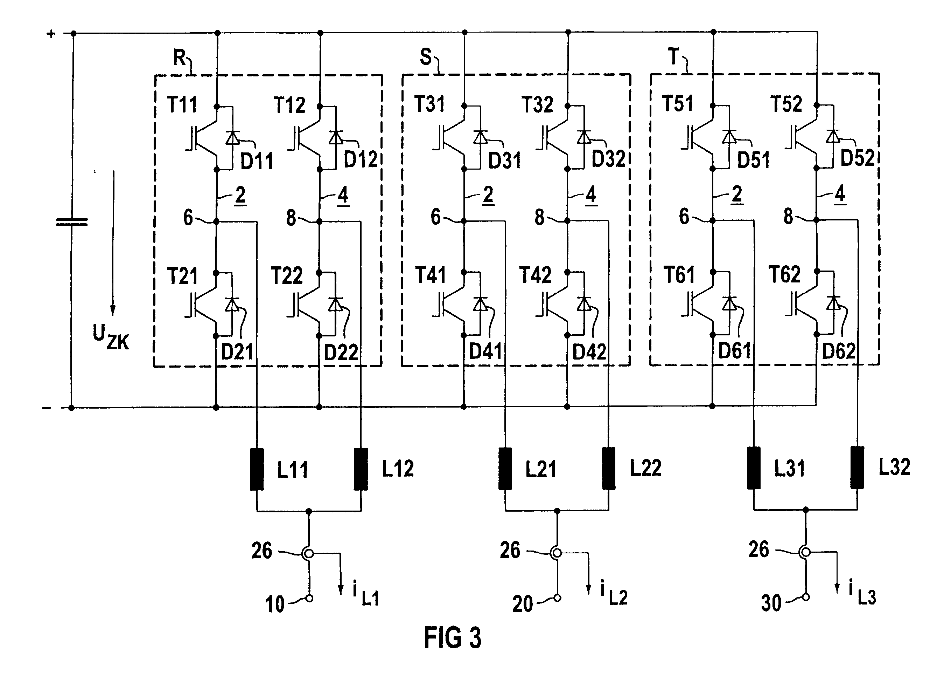

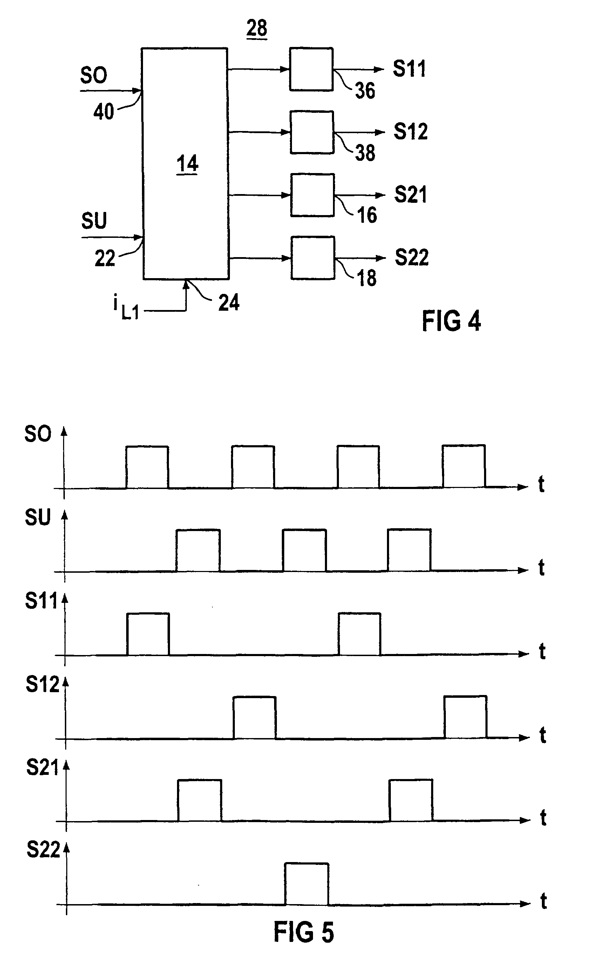

In der FIG 3 ist eine dreiphasige Stromrichterschaltung dargestellt, deren Phasen-Brückenzweige R, S und T jeweils zwei gleichspannungsseitig elektrisch parallel geschaltete Stromrichterzweige 2 und 4 aufweisen. Jeder Stromrichterzweig 2 bzw. 4 weist zwei Halbleiterschalter T11, T21 bzw. T12, T22 auf, die jeweils eine antiparallel geschaltete Diode D11, D21 bzw. D12, D22 aufweisen. Die Lastausgänge 6 und 8 der Stromrichterzweige 2 und 4 der drei Phasen-Brückenzweige R, S und T sind jeweils mit einer Drossel L11, L12; L21, L22 und L31, L32 verknüpft, wobei deren lastseitige Anschlüsse jeweils zu einem phasenmäßigen Lastausgang 10, 20 und 30 zusammengeschaltet sind. Die phasenmäßigen Lastströme i_{L1}, i_{L2} und i_{L3} werden mit Hilfe von Stromerfassung-Einrichtungen 26 ermittelt. Jeder Phasen-Brückenzweig R, S und T weist noch eine Steuerschaltung 28, 32 und 34 auf, von denen nur die Steuerschaltung 28 in der FIG 4 näher dargestellt ist.

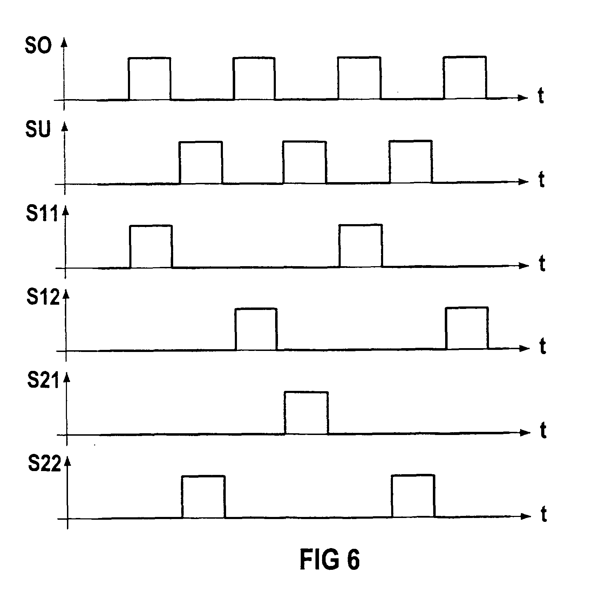

Diese Steuerschaltung 28 unterscheidet sich von der Steuerschaltung 12 gemäß FIG 1 dadurch, dass anstelle von zwei Ansteuerschaltungen 16 und 18 nun vier Ansteuerschaltungen 36, 38, 16 und 18 vorgesehen sind. Diese Ansteuerschaltungen 36, 38, 16 und 18 sind eingangsseitig jeweils mit einem Ausgang der Einrichtung 14 zur Generierung alternierender Steuersignale S11, S12, S21 und S22 verknüpft. An seinem Parameter-Eingang 24 steht der gemessene Laststrom i_{L1} an. Gegenüber der Ausführungsform der Einrichtung 14 von FIG 1 weist die Einrichtung 14 gemäß FIG 4 einen zweiten Steuereingang 40 auf, dem ein zweites Steuersignal SO zugeführt wird. Dieses zweite Steuersignal SO ist in einem Diagramm über der Zeit t der FIG 5 und der FIG 6 näher dargestellt.

Das Steuersignal SO bzw. SU ist für die oberen bzw. unteren Halbleiterschalter T11 und T12 bzw. T21 und T22 vorgesehen. Diese beiden Steuersignale SO und SU werden in einer nicht näher dargestellten übergeordneten Einrichtung aus einem bereitgestellten Rechtecksignal hergestellt. In einem ersten Schritt wird das bereitgestellte Rechtecksignal invertiert. Beim invertiertem Rechtecksignal werden noch Verriegelungszeiten eingerechnet, damit die Halbleiterschalter T11, T21 bzw. T12, T22 eines Stromrichterzweiges 2 bzw. 4 keinen Brückenkurzschluss erzeugen. Gemäß der stromrichtungsabhängigen Schaltreihenfolge für die oberen Halbleiterschalter T11, T12 und für die unteren Halbleiterschalter T21, T22 werden die Ansteuersignale des Steuersignals SO alternierend auf die beiden oberen Halbleiterschalter T11, T12 der beiden Stromrichterzweige 2 und 4 der Phasen-Brückenzweige R, S und T verteilt. Die Ansteuersignale des Steuersignals SU werden alternierend auf die beiden unteren Halbleiterschalter T21, T22 der beiden Stromrichterzweige 2 und 4 der Phasen-Brückenzweige R, S und T verteilt. Ein Vergleich der Diagramme der beiden FIG 5 und 6 zeigen, dass die Schaltreihenfolge von der Richtung des Laststromes i_{L1} abhängig ist.

Gegenüber einer bekannten dreiphasigen Stromrichterschaltung mit drei Phasen-Brückenzweigen R, S und T, die jeweils zwei Stromrichterzweige 2 und 4 aufweisen, wird die elektrische Verbindung zwischen den beiden Lastausgängen 6 und 8 der beiden Stromrichterzweige 2 und 4 aufgebrochen. Zusätzlich wird noch eine zweite Drossel derart vorgesehen, dass jeder Lastausgang 6 und 8 der beiden Stromrichterzweige 2 und 4 mit einer Drossel L11, L12 versehen ist. Außerdem müssen noch zwei Ansteuerschaltungen 28 und 18 und eine Einrichtung 14 zur Generierung von alternierenden Steuersignalen S11, S12 bzw. S21, S22 vorgesehen werden. Ein phasenmäßig ermittelter Laststrom i_{L1} wird dieser Einrichtung 14 zugeführt.

Durch diese hardwaremäßige Veränderung einer bisherigen dreiphasigen Stromrichterschaltung werden nun durch die stromrichtungsabhängige Schaltreihenfolge die Halbleiterschalter der Stromrichterzweige 2 und 4 von den Einschaltverlusten entlastet. Die Drosseln L11, L12 bzw. L21, L22 bzw. L31, L32, die zwei Stromrichterzweige ausgangsseitig entkoppeln, werden bei der Kommutierung des Laststromes von einem Stromrichterzweig 2 auf den zweiten Stromrichterzweig 4 und umgekehrt verwendet, wobei diese Drosseln keine Beschaltungselemente, wie Dioden und Widerstände benötigen, da die in der Drossel gespeicherte Energie in den Zwischenkreis rückgespeichert wird. Somit muss die in einer Drossel gespeicherte Energie nicht mit Hilfe einer Diode und eines Widerstandes in Wärme umgesetzt werden. Außerdem sind diese Drosseln im Kommutierungskreis, obwohl der Kommutierungskreis, bestehend aus Zwischenkreis-Kondensator CZK, abschaltbaren Halbleiterschalter T11 bzw. T12 bei einem positiven Strom und Freilaufdioden D22 bzw. D21, nicht aufgebrochen werden musste. Dadurch können weiterhin die für niederinduktive Zwischenkreise optimierten Verbindungs- und Aufbautechniken zum Einsatz kommen. Da zu Beginn jedes über die Drosseln laufenden Kommutierungsvorgangs eine der beiden Drosseln stromlos ist, können auch sättigbare Drosseln eingesetzt werden.

Da die Drosseln L11, L12 bzw. L21, L22 bzw. L31, L32 nur im Lastabgang der Stromrichterzweige 2 und 4 angeordnet sind, existieren niederinduktive, verlustbehaftete Kommutierungen von einer Freilaufdiode auf einen Halbleiterschalter innerhalb eines Stromrichterzweiges 2 bzw. 4. Wird beispielsweise die Stromrichtung gelegentlich nicht richtig erkannt und dadurch die Schaltreihenfolge gedreht, führt dies zu keinen Funktionsstörungen. Ebenso ist die Stromrichtungserkennung bei Strömen um Null herum unkritisch, da dann auch nicht entlastete Kommutierungsvorgänge nur geringe Verluste verursachen.

Durch die Entlastung der Halbleiterschalter T11, T21 und T12, T22 der beiden Stromrichterzweige 2 und 4 eines Phasen-Brückenzweiges R einer dreiphasigen Stromrichterschaltung können leistungsschwächere Halbleitermodule verwendet werden. Dadurch erhält man eine Kostenersparnis, die nur zu einem geringen Teil duch die zusätzlichen zwei Ansteuerschaltungen 38 und 18 und der Einrichtung 14 zum Generieren alternierender Steuersignale S11, S12 und S21, S22 reduziert wird.

## Patentansprüche

1. Stromrichterschaltung mit mehreren Phasen-Brückenzweigen (R,S,T), wobei jeder Phasen-Brückenzweig (R,S,T) zwei gleichspannungsseitig elektrisch parallel geschaltete Stromrichterzweige (2,4) aufweist, die jeweils zwei elektrisch in Reihe geschaltete abschaltbare Halbleiterschalter (T11,T21,T12,T22; T31,T41,T32,T42;T51,T61,T52,T62) aufweisen, wobei die Lastausgänge (6,8) eines jeden Stromrichterzweiges (2,4) eines jeden Phasen-Brückenzweiges (R,S,T) mit einer Drossel (L11,L12;L21,L22;L31,L32) verknüpft sind, deren lastseitige Anschlüsse jeweils einen Lastanschluss (10,20,30) eines jeden Phasen-Brückenzweiges (R,S,T) bilden, wobei die Steueranschlüsse dieser Halbleiterschalter (T11,T21,T12,T22;T31,T41, T32,T42;T51,T61,T52,T62) jeweils mit einem Ausgang einer Ansteuerschaltung (36,38,16,18) verknüpft sind, **dadurch gekennzeichnet, dass** jede Ansteuerschaltung (36,38,16,18) eingangsseitig mit einem Ausgang einer Einrichtung (14) zur Generierung von Steuersignalen (S11,S12,S21,S22) verbunden sind, dass an zwei Steuer-Eingängen (40,22) dieser Einrichtung (14) ein Steuersignal (SO) für die oberen Halbleiterschalter (T11, T21,T32;T51,T61)eines jeden Phasen-Brückenzweiges (R,S,T) und ein Steuersignal (SU) für die unteren Halbleiterschalter (T21,T22;T41,T42;T61,T62) eines jeden Phasen-Brückenzweiges (R,S,T) anstehen und dass an einem Parameter-Eingang (24) ein ermittelter Phasen-Laststrom (i_{L1}) ansteht, wobei die Einrichtung (14) die Impulse eines oberen bzw. eines unteren Steuersignals (SO,SU) auf die Steuersignale (S11,S12) für die oberen Halbleiterschalter (T11,T12;T31,T32;T51,T52) bzw. für die unteren Halbleiterschalter (T21,T22;T41,T42;T61,T62) eines jeden Phasen-Brückenzweiges (R,S,T) alternierend aufteilt.

2. Stromrichterschaltung nach Anspruch 1,**dadurch gekennzeichnet, dass** die Drossel (L11,L12; L21,L22; L31,L32) eine sättigbare Drossel ist.

3. Stromrichterschaltung nach Anspruch 1 oder 2, **dadurch gekennzeichnet, dass** die Einrichtungen (14) zur Generierung von alternierenden Steuersignalen (S11,S12;S21,S22) mehrerer Phasen-Brückenzweige (R,S,T) eine Baueinheit bilden.

4. Stromrichterschaltung nach einem der zuvor genannten Ansprüche 1 bis 3, **dadurch gekennzeichnet, dass** die abschaltbaren Halbleiterschalter (T11,T21,T12,T22,T31,T41,T51,T61,T52, T62) jeweils ein Insulated-Gate-Bipolar-Transistor sind.

5. Verfahren zur Steuerung abschaltbarer Halbleiterschalter (T11,T12,T21,T22; T31,T32,T41,T42;T51,T52,T61,T62) mehrerer Phasen-Brückenzweige (R,S,T), die jeweils zwei gleichspannungsseitig elektrisch parallel geschaltete Stromrichterzweige (2,4) aufweisen, mit folgenden Verfahrensschritten:
a) invertieren eines bereitgestellten Steuersignals,
b) Impulse des bereitgestellten Steuersignals (SO) alternativ auf Steuersignale (S11,S12) der oberen abschaltbaren Halbleiterschalter (T11,T12) der beiden Stromrichterzweige (2,4) eines jeden Phasen-Brückenzweiges (R,S,T) aufteilen,
c) Impulse des invertierten bereitgestellten Steuersignals (SU) alternativ auf Steuersignale (S21,S22) der beiden unteren abschaltbaren Halbleiterschalter (T21,T22) der beiden Stromrichterzweige (2,4) eines jeden Phasen-Brückenzweiges (R,S,T) aufteilen und
d) die Verfahrensschritte b) oder c) in Abhängigkeit einer Stromrichtung eines ermittelten Laststromes (i_{L1},i_{L2},i_{L3}) eines Phasen-Brückenzweiges (R,S,T) ausführen.

## Claims

1. Power converter circuit comprising a plurality of phase bridge branches (R, S, T), wherein each phase bridge branch (R, S, T) has two power converter branches (2, 4) which are electrically connected in parallel on the DC voltage side and which each have two turn-off semiconductor switches (T11, T21, T12, T22; T31, T41, T32, T42; T51, T61, T52, T62) electrically connected in series, wherein the load outlets (6, 8) of each power converter branch (2, 4) of each phase bridge branch (R, S, T) are linked to an inductor (L11, L12; L21, L22; L31, L32), the load-side connections of which respectively form a load connection (10, 20, 30) of each phase bridge branch (R, S, T), wherein the control connections of said semiconductor switches (T11, T21, T12, T22; T31, T41, T32, T42; T51, T61, T52, T62) are in each case linked to an output of a drive circuit (36, 38, 16, 18), **characterized in that** each drive circuit (36, 38, 16, 18) is connected, on the input side, to an output of a device (14) for generating control signals (S11, S12, S21, S22), **in that** a control signal (SU) for the upper semiconductor switches (T11, T21, T32; T51, T61) of each phase bridge branch (R, S, T) and a control signal (SU) for the lower semiconductor switches (T21, T22; T41, T42; T61, T62) of each phase bridge (R, S, T) are present at two control inputs (40, 22) of said device (14), and **in that** a phase load current (i_{L1}) determined is present at a parameter input (24), wherein the device (14) alternately divides the pulses of an upper or of a lower control signal (SO, SU) between the control signals (S11, S12) for the upper semiconductor switches (T11, T12; T31, T32; T51, T52) and, respectively, for the lower semiconductor switches (T21, T22; T41, T42; T61, T62) of each phase bridge branch (R, S, T).

2. Power converter circuit according to Claim 1, **characterized in that** the inductor (L11, L12; L21, L22; L31, L32) is a saturable reactor.

3. Power converter circuit according to Claim 1 or 2, **characterized in that** the devices (14) for generating alternating control signals (S11, S12; S21, S22) of a plurality of phase bridge branches (R, S, T) form a structural unit.

4. Power converter circuit according to any of the preceding Claims 1 to 3, **characterized in that** the turn-off semiconductor switches (T11, T21, T12, T22, T31, T41, T51, T61, T52, T62) are in each case an insulated gate bipolar transistor.

5. Method for controlling turn-off semiconductor switches (T11, T12, T21, T22, T31, T32, T41, T42; T51, T52, T61, T62) of a plurality of phase bridge branches (R, S, T) each having two power converter branches (2, 4) electrically connected in parallel on the DC voltage side, comprising the following method steps:
a) inverting a control signal provided:
b) dividing pulses of the control signal (SO) provided alternatively between control signals (S11, S12) of the upper turn-off semiconductor switches (T11, T12) of the two power converter branches (2, 4) of each phase bridge branch (R, S, T) and
c) dividing pulses of the inverted control signal (SU) provided alternatively between control signals (S21, S22) of the two lower turn-off semiconductor switches (T21, T22) of the two power converter branches (2, 4) of each phase bridge branch (R, S, T) and
d) performing method step b) or c) in a manner dependent on a current direction of a determined load current (i_{L1}, i_{L2}, i_{L3}) of a phase bridge branch (R, S, T).

## Revendications

1. Circuit convertisseur de puissance comprenant plusieurs branches de pont de phase ( R, S, T ), chaque branche de pont de phase ( R, S, T ) ayant deux branches ( 2, 4 ) de convertisseur montées électriquement en parallèle du côté de la tension continue et ayant respectivement deux commutateurs ( T11, T21, T12, T22 ; T31, T41, T32, T42 ; T51, T61, T52, T62 ) à semi-conducteur de coupure, montés électriquement en série, les sorties ( 6, 8 ) de charge de chaque branche ( 2, 4 ) de convertisseur de chaque branche de pont de phase ( R, S, T ) étant combinées avec une bobine ( L11, L12 ; L21, L22 ; L31, L32 ) dont les bornes du côté de la charge forment respectivement une borne ( 10, 20, 30 ) de charge de chaque branche de pont de phase ( R, S,T ), les bornes de commande de ces commutateurs ( T11, T21, T12, T22 ; T31, T41, T32, T42 ; T51, T61, T52, T62 ) à semi-conducteur étant combinées respectivement à une sortie d'un circuit ( 36, 38, 16, 18 ) de commande, **caractérisé en ce que** chaque circuit ( 36, 38, 16, 18 ) de commande est relié du côté de l'entrée à une sortie d'un dispositif ( 14 ) de production de signaux ( S11, S12, S21, S22 ) de commande, **en ce que** sur deux entrées ( 40, 22 ) de commande de ce dispositif ( 14 ) est appliqué un signal ( S0 ) de commande des commutateurs (T11, T21, T32 ; T51, T61 ) à semi-conducteur supérieurs de chaque branche de pont de phase ( R, S, T ) et un signal ( SU ) de commande des commutateurs ( T21, T22 ; T41, T42 ; T61, T62 ) à semi-conducteur inférieurs de chaque branche de pont de phase ( R, S, T ) et **en ce que** sur une entrée ( 24 ) de paramètre est appliquée un courant ( i_{L1}) de charge de phase déterminé, le dispositif ( 14 ) répartissant en alternance les impulsions d'un signal ( SO ) supérieur de commande ou d'un signal ( SU ) inférieur de commande sur les signaux ( S11, S12 ) de commande des commutateurs ( T11, T12 ; T31, T32 ; T51, T52 ) à semi-conducteur supérieurs ou des commutateurs ( T21, T22 ; T41, T42 ; T61, T62 ) à semi-conducteur inférieurs de chaque branche de pont de phase ( R, S, T ).

2. Circuit convertisseur de puissance suivant la revendication 1, **caractérisé en ce que** la bobine ( L11, L12 ; L21, L22 ; L31, L32 ) est une bobine saturable.

3. Circuit convertisseur de puissance suivant la revendication 1 ou 2, **caractérisé en ce que** les dispositifs ( 14 ) de production et de signaux ( S11, S12 ; S21, S22 ) de commande en alternance de plusieurs branches de pont de phase ( R, S, T ) forme une unité de construction.

4. Circuit convertisseur de puissance suivant l'une des revendications mentionnées précédemment 1 à 3, **caractérisé en ce que** les commutateurs ( T11, T21, T12, T22 ; T31, T41, T32, T42 ; T51, T61, T52, T62 ) à semi-conducteurs de coupure sont respectivement un transistor bipolaire à grille isolée.

5. Procédé de commande de commutateurs ( T11, T21, T12, T22 ; T31, T41, T32, T42 ; T51, T61, T52, T62 ) à semi-conducteur de coupure de plusieurs branches de pont de phase ( R, S, T ), qui ont respectivement deux branches de convertisseur montées électriquement en parallèle du côté de la tension continue, comprenant les stades suivantes :
a ) on inverse un signal de commande fourni,
b ) on répartit les impulsions du signal ( SO ) de commande fourni en alternance sur des signaux ( S11, S12 ) de commande des deux commutateurs ( T11, T12 ) à semi-conducteur de coupure supérieurs des deux branches ( 2, 4 ) de convertisseur de chaque branche de pont de phase ( R, S, T ),
c) on répartit des impulsions du signal ( SU ) de commande fourni inversé en alternance sur des signaux ( S21, S22 ) de commande des deux commutateurs ( T21, T22 ) à semi-conducteur de coupure inférieurs des deux branches ( 2, 4 ) de convertisseur de puissance de chaque branche de pont de phase ( R, S, T ) et
d) on exécute les stades b ) ou c ) du procédé en fonction d'un sens d'un courant ( i_{L1}, i_{L2}, i_{L3} ) de charge déterminé d'une branche de pont de phase ( R, S, T ).
